# FASCICULE DE BREVET EUROPEEN

(11) **EP 3 304 625 B1**
(45) Date de publication et mention de la délivrance du brevet: **25.03.2020**
(21) Numéro de dépôt: 16798981.3
(22) Date de dépôt: 04.01.2016
(51) Int. Cl.: H01M 4/36, H01M 4/485, H01M 4/58, H01M 4/62, H01M 10/052

(54) **PROCÉDÉ POUR LA PROTECTION DE MATÉRIAUX D'ÉLECTRODE CONTRE L'HUMIDITÉ**
VERFAHREN ZUM SCHUTZ VON ELEKTRODENMATERIALIEN VOR FEUCHTIGKEIT
PROCESS FOR PROTECTING ELECTRODE MATERIALS AGAINST MOISTURE

(30) Priorité: 27.05.2015 US 201562166946 P
(43) Date de publication de la demande: 11.04.2018
(73) Titulaire: Hydro-Québec, Montréal QC H2Z 1A4 (CA); Transfert Plus, S.E.C., Montréal, Québec H3C 2G9 (CA)
(72) Inventeur: BÉLANGER, Daniel, Saint-Hubert, Québec J3Y 8T9 (CA); DELAPORTE, Nicolas, Montréal, Québec H2K 3A2 (CA); ZAGHIB, Karim, Longueuil, Québec J4N 1T8 (CA)
(74) Mandataire: Lang, Johannes
(86) Numéro de dépôt international: PCT/CA2016/050002
(87) Numéro de publication internationale: WO 2016/187699

(56) Documents cités:
- WO-A1-01/28015
- WO-A1-2012/035217
- L. MADEC ET AL: "Synergistic Effect in Carbon Coated LiFePO4 for High Yield Spontaneous Grafting of Diazonium Salt. Structural Examination at the Grain Agglomerate Scale", JOURNAL OF THE AMERICAN CHEMICAL SOCIETY, vol. 135, no. 31, 15 juillet 2013 (2013-07-15), pages 11614-11622, XP055533312, ISSN: 0002-7863, DOI: 10.1021/ja405087x
- G. SHUL ET AL: "Localized In situ Generation of Diazonium Cations by Electrocatalytic Formation of a Diazotization Reagent", ACS APPLIED MATERIALS & INTERFACES, vol. 5, no. 4, 15 janvier 2013 (2013-01-15), pages 1468-1473, XP055533343, US ISSN: 1944-8244, DOI: 10.1021/am302971q
- DELAPORTE ET AL.: 'Chemically grafted carbon-coated LiFePO4 using diazonium chemistry' JOURNAL OF POWER SOURCES vol. 280, 2015, pages 246 - 255, XP055331656
- ALLOIN ET AL.: 'The Interest of Diazonium Chemistry for Aqueous Lithium-Ion Battery' JOURNAL OF THE ELECTROCHEMICAL SOCIETY vol. 160, no. 5, 2013, pages A3171 - A3178, XP055331660
- WEISSMANN ET AL.: 'Modification of hydrophobic/hydrophilic properties of Vulcan XC72 carbon powder by grafting of trifluoromethylphenyl and phenylsulfonic acid groups' CARBON vol. 48, no. 10, 2010, pages 2755 - 2764, XP055331662
- THOMAS ET AL.: 'NewMethodfor Super Hydrophobic Treatment of Gas Diffusion Layers for Proton Exchange Membrane Fuel Cells Using Electrochemical Reduction of Diazonium Salts' APPLIED MATERIALS & INTERFACES vol. 7, no. 27, 2015, pages 15068 - 15077, XP008178080

## Description

### DOMAINE TECHNIQUE

La présente demande se réfère à des procédés de modification de surface de matériaux enrobés de carbone tels que les matériaux de cathode Li-ion, par exemple, des oxydes complexes, notamment pour la modification de matériaux d'électrode de type olivine enrobé de carbone. Cette demande envisage en outre les matériaux modifiés résultants et leur utilisation, par exemple, dans la préparation d'électrodes et de cellules électrochimiques.

### CONTEXTE TECHNIQUE

Le matériau de cathode de type olivine est un candidat prometteur pour utilisation dans des batteries, particulièrement les matériaux de phosphate de fer lithié de type olivine tel que LiFePO₄. Sa structure contenant du phosphate lui procure une bonne stabilité électrochimique et une très bonne cyclabilité, cependant, sa conductivité électronique est faible. Afin de contrôler la taille de ses particules, assurer une bonne cristallinité de surface, et améliorer sa conductivité, le matériau est généralement enrobé de carbone. Un autre problème associé à LiFePO₄ concerne son entreposage qui doit se faire sous atmosphère contrôlée pour éviter son oxydation. Les matériaux de type olivine, et surtout LiFePO₄, sont partiellement et rapidement oxydés au contact de l'humidité. Par conséquent, assurer la bonne stabilité de la poudre lorsqu'exposée à l'air ambiant, par exemple, dans les conditions industrielles utilisées pour la fabrication d'électrodes, est un véritable défi.

Au cours des dernières décennies, la réduction de sels de diazonium a été étudiée pour la fonctionnalisation de surfaces (voir D. Belanger et al., Chem. Soc. Rev., 2011, 40, 3995-4048; M. Delamar et al., J. Am. Chem., Soc. 1992, 114, 5883-5884; et M. Toupin et al., J. Phys. Chem. C, 2007, 111, 5394-5401), incluant principalement la modification de surfaces de matériaux de carbone. Des surfaces de carbone modifiées peuvent être préparées par réaction avec un sel de diazonium dans un milieu liquide afin de lier des groupements organiques à leur surface.

La modification est possible, par exemple, par réaction du substrat avec des ions diazonium générés *in situ* (voir les brevets américains numéro 5,672,198; 5,698,016; et 5,707,432). Une amine aromatique substituée, en présence d'un agent de diazotation en solution, mène à la formation du cation diazonium correspondant. Le procédé chimique de greffage conduit à la fixation de différents groupes aryle substitués, incluant une liaison carbone-carbone covalente solide entre le substrat et le groupe greffé. Un greffage utilisant la chimie du diazonium est généralement accepté comme se produisant via un mécanisme radicalaire (F. Barrière et al., J. Solid State Electrochem., 2008, 12, 1231-1244). Le radical organique résultant réagit avec la surface et conduit à la formation d'une liaison covalente (S. Mahouche-Chergui et al., Chem. Soc. Rev., 2011, 40, 4143-4166). Cependant, le mécanisme de fonctionnalisation dans le cas d'un greffage spontané est encore incertain (M. Toupin et al., Langmuir, 2008, 24, 1910-1917; F. Le Floch et al., Electrochim. Acta, 2009, 54, 3078-3085; A. Adenier et al., Surface Science, 2006, 600, 4801-4812; P. Abiman et al., J. Phys. Org. Chem., 2008, 21, 433-439; et A. Mesnage et al., Langmuir, 2012, 28, 11767-11778. Néanmoins, des études précédentes ont démontré que la couche peut se développer par des réactions radicalaires en position ortho du groupement fonctionnel (F. Barrière *et al*., *Supra*).

La fonctionnalisation basée sur le diazonium a d'abord été proposée pour la stabilisation de l'électrode de carbone d'une batterie au lithium par la formation d'une couche de benzoate de lithium (voir L. G. Shaidarova et al., J. Anal. Chem., 2008, 63, 922-942) ou de nitrophényle (see D.M.A.I. Turyan, Electroanalysis, 1996, 8, 207-213). Des anodes de silicium modifiées par des molécules organiques dérivées d'ions diazonium ont révélé une stabilité de cyclage supérieure (voir S. Yang et al., J. Mater. Chem., 2012, 22, 3420; S. Yang et al., Electrochem. Comm., 2010, 12, 479-482; C. Martin et al., Adv. Funct. Mater., 2011, 21, 3524-3530; et C. Martin et al., Adv. Mater., 2009, 21, pp. 4735-4741). L'étude initiale sur les matériaux d'électrode positive modifiés par des diazoniums impliquait le greffage de groupements nitrophényles sur Li_{1.1}V₃O₈ (F. Tanguy et al., J. Mater. Chem., 2009, 19, 4771). Plus tard, les poudres de LiFePO₄ ont été fonctionnalisées avec des molécules redox afin d'aider l'insertion des ions Li⁺ (voir L. Madec et al., J. Pow. Sour., 2013, 232, 246-253). Le greffage spontané de groupes nitrophényles à la surface de C-LiFePO₄ a été tenté mais l'oxydation partielle de LiFePO₄ a été constatée, menant donc à la formation d'une phase délithiée (voir L. Madec et al., J. Am. Chem. Soc., 2013, 135, 11614-11622).

Le greffage électrochimique de groupements 4-trifluoromethylbenzene a déjà été réalisé sur des électrodes de cuivre ou de carbone vitreux (voir M. Weissmann et al., Carbon, 2010, 48, 2755-2764; et G. Shul et al., ACS Appl. Mater. Interfaces, 2013, 5, 1468-1473). Une poudre de carbone Vulcan XC72, typiquement utilisée pour la préparation de couche active de type PEMFC Pt/C, a également été chimiquement modifiée par greffage spontané de groupements 4-trifluorométhylbenzène. Toutefois, le greffage de 6,5% en poids de ces molécules a affecté de manière significative le comportement macroscopique de la poudre de carbone. Le brevet américain no 6,399,202 décrit un procédé pour la préparation de noir de carbone modifié utilisant la 3-trifluorométhylaniline comme molécule de départ.

Les articles de N. Delaporte et al. dans Journal of Power Sources, vol. 280, 2015, pages 246-255, et F. Alloin et al. dans Journal of the Electrochemical Society, vol. 160, no. 5, 2013, pages A3171-A3178, décrivent également des procédés de fonctionnalisation de la surface de matériaux de type LiFePO4/C avec des groupements aryles substitués, en utilisant la chimie du diazonium.

Le document WO 2012/035217 A1 divulgue un générateur électrochimique comportant des première et seconde électrodes séparées par une solution électrolytique, ladite première électrode étant recouverte par une couche de passivation, caractérisé en ce que la couche de passivation est formée par greffage de groupements aryles substitués par un polyéther sur la surface d'un matériau électrochimiquement actif, tel que LiFePO4.

### SOMMAIRE

Selon un aspect, cette demande concerne la préparation de matériaux d'électrode pour incorporation dans une cellule électrochimique, la préparation comprenant la modification de la surface de carbone d'un matériau électrochimiquement actif enrobé de carbone, par le greffage de groupes hydrophobes. Dans un mode de réalisation, la présente technologie concerne un procédé de préparation d'un matériau d'électrode, le procédé comprenant une étape de greffage, sur un matériau électrochimiquement actif, d'un groupement aryle de Formule (I): 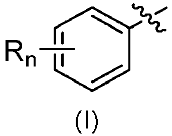 dans laquelle,
R est, indépendamment en chaque occurrence, un groupe hydrophobe, par exemple un groupe C₁₋₁₂alkyle substitué ou non-substitué, un groupe C₅₋₁₂alkyle substitué ou non-substitué, un groupe C₅₋₁₂alkyle non-substitué, un C₁₋₃alkyle substitué par un ou plusieurs groupe(s) hydrophobe(s) tel que le fluor, ou R est un groupe trifluorométhyle ou un fluor, de préférence un groupe trifluorométhyle; et
n est un nombre entier choisi parmi 1 à 5, de préférence n se situe dans l'intervalle de 1 à 3, de préférence n est 1 ou 2, ou n est 1 ;
dans lequel le matériau électrochimiquement actif comprend des particules d'oxyde complexe enrobées d'une couche de carbone, et dans lequel ledit greffage se produit sur la couche de carbone, la couche de carbone formant un enrobage uniforme et adhérent sur les particules d'oxyde complexe. Par exemple, le groupe aryle de Formule (I) est le 4-trifluorométhylphényle.

Selon la présente invention, le procédé de greffage comprend les étapes de:
(a) génération d'un ion diazonium à partir d'une aniline de Formule (II): 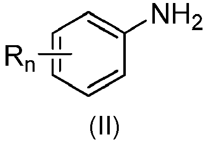 dans laquelle R et n sont tels que définis ci-dessus;
   en présence d'un agent de diazotation, de préférence un sel de nitrite ou un alkylnitrite; et
(b) réaction de l'ion diazonium généré à l'étape (a) avec la couche de carbone du matériau électrochimiquement actif.

Par exemple, l'étape de greffage est réalisée par électro-réduction de l'ion diazonium généré à partir de l'aniline de Formule (II). L'agent de diazotation peut aussi être généré par réduction électrocatalytique du nitrate.

Dans un mode de réalisation, l'ion diazonium est généré *in situ.* L'ion diazonium peut aussi être généré dans un milieu réactionnel avant l'addition du matériau électrochimiquement actif au milieu réactionnel. Dans l'alternative, l'ion diazonium peut être généré avant son addition au milieu réactionnel comprenant le matériau électrochimiquement actif.

Selon un mode de réalisation, l'oxyde complexe compris dans le matériau électrochimiquement actif est un matériau de Formule (III):

LiMPO₄ (III)

dans laquelle M est au moins l'un de Fe, Co, Ni, et Mn; ou
dans laquelle M est M'ₓM"_{y} où x + y =1, où M' et M" sont chacun, de manière indépendante, choisis parmi Fe, Co, Ni, et Mn. Par exemple, l'oxyde complexe est LiFePO₄, LiCoPO₄, LiMnPO₄, ou LiFeₓMn_{y}PO₄ où 0<x,y<1 et x+y=1, de préférence l'oxyde complexe est le LiFePO₄. Par exemple, l'oxyde de complexe de Formule III est de type olivine.

Selon un autre mode de réalisation, l'oxyde complexe est un titanate ou un titanate de lithium tel que Li₄Ti₅O₁₂. Selon un autre mode de réalisation, le matériau électrochimiquement actif utilisé dans le procédé comprend des nanoparticules de l'oxyde complexe enrobé de carbone.

Selon un autre mode de réalisation, l'étape de greffage est accomplie durant une période de 16 heures ou moins, de 12 heures ou moins, ou de 2 à 12 heures, de 8 heures ou moins, ou de 2 à 8 heures, bornes incluses. Le greffage peut être effectué à une température entre 0°C et la température de la pièce, bornes incluses. De préférence, l'étape de greffage est effectuée sous atmosphère inerte, tel que sous argon ou azote. L'étape de greffage peut être effectuée dans un solvant polaire, des exemples comprenant, sans limitation, de l'acétonitrile, de l'eau, un carbonate (e.g. carbonate de propylène, carbonate d'éthylène, ou un carbonate de dialkyle), du diméthylsulfoxyde, ou toute combinaison de ce qui précède.

Le procédé peut aussi comprendre, en outre, une étape de séchage du matériau greffé sous pression réduite à une température d'environ 50°C à environ 110°C pour une de temps d'au moins 12 h, de préférence à environ 70°C. La concentration d'aniline dans le milieu réactionnel peut varier d'environ 2 à environ 200 mmol/L, ou d'environ 20 à d'environ 160 mmol/L. L'agent de diazotation peut être utilisé dans un intervalle de 1 à 3 équivalents molaires par rapport à l'aniline, par exemple de 1 à 2 équivalents. Le matériau électrochimiquement actif peut être utilisé dans un milieu réactionnel à une concentration se situant dans l'intervalle d'environ 5 g/L à environ 50 g/L, par exemple à environ 30 g/L.

Selon un autre mode de réalisation, le procédé tel que défini ici peut comprendre, en outre, une étape de relithiation du matériau d'électrode par contact du matériau greffé avec des ions lithium, par exemple, avec un excès molaire d'ions lithium en solution.

Selon un autre aspect, la présente technologie concerne un matériau d'électrode préparé par un procédé tel qu'ici défini en référence à l'un ou l'autre des modes de réalisation ci-dessus. Le matériau d'électrode (le matériau d'électrode greffé) est un matériau électrochimiquement actif comprenant des particules d'oxyde complexe enrobées d'une couche de carbone, dans lequel un groupement aryle de Formule (I) est lié, via un lien carbone-carbone covalent, à la couche de carbone du matériau électrochimiquement actif. Le matériau d'électrode peut être caractérisé en ce que le taux de greffage du groupement aryle est d'au moins 0.1% en poids, par rapport au poids total de l'électrode. Par exemple, le taux de greffage est d'environ 0.1% en poids à environ 1.5%, ou d'environ 0.1% en poids à environ 0.8% en poids, ou d'environ 0.5% en poids à environ 1.2% en poids, ou d'environ 0.5% en poids à environ 0.8% en poids.

Selon un autre aspect, la présente technologie concerne une électrode comprenant, sur un collecteur de courant, une couche ou un film comprenant un matériau d'électrode tel que défini selon l'un des modes de réalisation précédents, ou est obtenu par l'un des procédés décrits dans la présente demande. Dans un mode de réalisation, l'électrode est une cathode. Par exemple, l'électrode peu aussi comprendre, en outre, un ou plusieurs additifs comme un liant, par exemple, un liant polymère.

Encore selon un autre aspect, la présente technologie concerne les cellules électrochimiques comprenant une électrode telle que décrite dans la présente demande, un électrolyte et une contre-électrode (une deuxième électrode de polarité inverse). Par exemple, l'électrolyte peut être un électrolyte liquide ou gel, qui peut comprendre un sel de lithium dans un solvant comme le carbonate d'éthylène, le carbonate de propylène, un carbonate de dialkyle, ou une de leur combinaison (par exemple une solution 1M de LiPF₆ dans EC:DC:DCM). L'électrolyte gel peut aussi comprendre un polymère. Comme autre exemple, l'électrolyte peut être un électrolyte polymère solide, par exemple, comprenant un polymère réticulable et ramifié conducteur d'ions.

Selon un autre aspect, la présente technologie concerne l'utilisation d'un procédé tel qu'ici défini en référence à l'un quelconque des modes de réalisation et exemples décrits, pour la protection d'un matériau électrochimiquement actif contre l'humidité.

### BRÈVE DESCRIPTION DES FIGURES

La figure 1 montre des photographies de (a) une poudre de C-LFP non-modifiée et (b) une poudre C-LFP modifiée, toutes deux suspendues dans l'eau.
La figure 2 montre une photographie de la poudre de C-LFP non-modifiée (gauche) et de la poudre C-LFP modifiée (droite), après agitation dans l'eau pendant 24 heures.
La figure 3 présente les courbes thermogravimétriques enregistrées sous air pour le LiFePO₄/C non modifié et les 4 poudres de l'Exemple 4 modifiées avec des groupements trifluorométhylephényle.
La figure 4 illustre la mesure d'angle de contact d'une goutte d'eau sur une électrode de LiFePO₄/C non modifié (gauche, 113°) et de LiFePO₄/C modifié (droite, 138°).
La figure 5 présente le diffractogramme des rayons X de l'échantillon greffé TFN₁ de l'Exemple 4 (a) avant et (b) après relithiation chimique. La phase délithiée n'est plus visible après relithiation.
La figure 6 montre les capacités spécifiques obtenues en décharge pour différentes épaisseurs de cathode de LiFePO₄ (LFP), TFN₁, TFN₄ et pour la cathode de LFP HQ en fonction du taux de cyclage (masse et épaisseur en bas à gauche). La figure en inséré permet d'identifier les cathodes.
La figure 7 présente un diagramme de Nyquist pour différentes épaisseurs de cathode de LiFePO₄, TFN₁, TFN₄ et pour la cathode de LFP HQ (masse et épaisseur en haut à gauche). Données enregistrées à 2.5 V vs. LTO.

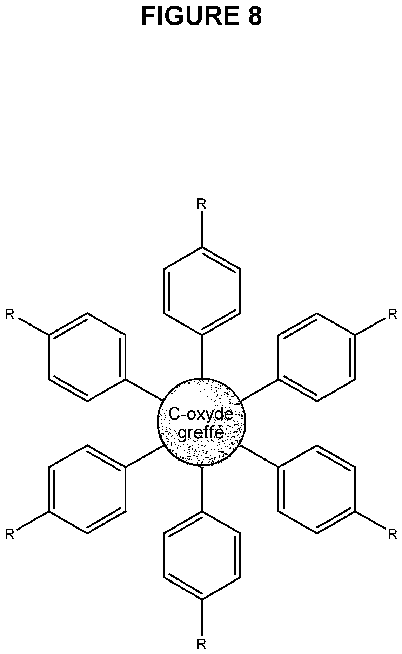

La figure 8 illustre une particule d'oxyde enrobée de carbone (C-Oxyde) sur laquelle sont greffés des groupements aryles (R).

### DESCRIPTION DÉTAILLÉE

La chimie du diazonium est ici décrite pour le greffage de groupements hydrophobes sur la surface de carbone d'un matériau électrochimiquement actif, par exemple fait de particules d'oxyde complexe enrobées de carbone. La présente technologie concerne donc une nouvelle route pour l'augmentation de l'hydrophobicité of particules d'oxyde complexe enrobées de carbone par la modification de leur surface. Par exemple, la modification à lieu par réaction spontanée d'ions aryles générés *in situ* avec l'enrobage de carbone du matériau de cathode, les ions aryle résultant de la diazotation d'anilines. Par exemple, l'aniline peut être un groupe aniline substitué par un ou plusieurs substituent(s) hydrophobe(s) tels que des groupes alkyle, fluoroalkyle, et fluor. Les matériaux d'électrodes résultants, ainsi que leurs utilisations dans la préparation d'électrodes pour incorporation dans des cellules électrochimiques, sont aussi envisagés.

Le matériau électrochimiquement actif peut être tout matériau enrobé de carbone utile dans des électrodes, notamment les oxydes complexes enrobés de carbone sous forme de particules, incluant les nanoparticules. Par exemple, la présente technologie peut être utile avec des oxydes complexes ayant une conductivité électronique réduite et qui sont souvent utilisés sous forme de particules recouvertes de carbone.

Par exemple, l'oxyde complexe compris dans le matériau électrochimiquement actif est un matériau de Formule (III):

LiMPO₄ (III)

dans laquelle M est au moins un de Fe, Co, Ni, et Mn; ou
dans laquelle M est M'ₓM"_{y} où x + y = 1, où M' et M" sont chacun indépendamment choisi parmi Fe, Co, Ni, et Mn.

Par exemple, l'oxyde complexe est LiFePO₄, LiCoPO₄, LiMnPO₄, ou LiFeₓMn_{y}PO₄, où 0<x,y<1 et x+y=1, de préférence l'oxyde complexe est LiFePO₄. Selon un mode de réalisation, l'oxyde complexe de Formule III est de type olivine.

D'autres exemples d'oxydes complexes seraient appropriés dans le présent procédé. Par exemple, l'oxyde complexe peut être un titanate ou un titanate de lithium tel que Li₄Ti₅O₁₂.

Les particules d'oxyde complexe sont enrobées d'une couche de matériau de carbone. Selon la présente invention, la couche de carbone est uniforme et adhérente aux particules d'oxyde complexe, par exemple, un enrobage de carbone non-poudreux. Un tel enrobage de carbone peut être obtenu, entre autre, par la décomposition, disproportionation, déshydrogénation ou pyrolyse d'un précurseur de carbone, comme un précurseur de carbone organique ou polymérique.

Le procédé de la présente demande inclut une étape de greffage sur l'enrobage de carbone du matériau électrochimiquement actif, d'un groupement aryle de Formule (I): 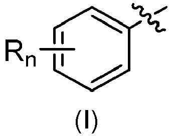 dans laquelle,
R est, indépendamment à chaque occurrence, un groupe hydrophobe, par exemple un groupe C₁₋₁₂alkyle substitué ou non-substitué, un groupe C₅₋₁₂alkyle substitué ou non-substitué, un groupe C₅₋₁₂alkyle non-substitué, un C₁₋₃alkyle substitué par un ou plusieurs groupe(s) hydrophobe(s) tel que le fluor, ou R est un groupe trifluorométhyle ou fluor, de préférence un groupe trifluorométhyle; et
n est un nombre entier choisi parmi les nombres de 1 à 5, de préférence n se situe dans l'intervalle de 1 à 3, de préférence n est 1 ou 2, ou n est 1;
dans lequel le matériau électrochimiquement actif comprend des particules d'oxyde complexe enrobées d'une couche de carbone, et dans lequel ledit greffage se produit sur la couche de carbone.

Par exemple, le terme alkyle désigne un résidu hydrocarboné ramifié ou linéaire saturé qui, à moins d'indication contraire, peut aussi être substitué.

Des exemples de groupements aryle de formule (I) comprennent, sans limitation, 4-pentylphényle, 4-isoamylphényle, 4-néopentylphényle, 4-hexylphényle, 4-heptylphényle, 3,4-diméthylphényle, 3,4-diéthylphényle, 3,4-dipropylphényle, 3,4-dibutylphényle, 2,4-diméthylphényle, 2,4-diéthylphényle, 2,4-dipropylphényle, 2,4-dibutylphényle, 3,4,5-triméthylphényle, 3,4,5-triéthylphényle, 4-fluorophényle, 2,4-difluorophényle, 3,4-difluorophényle, 4-trifluorométhylphényle, 2,4-bis(trifluorométhyl)phényle, 3,4-bis(trifluorométhyl)phényle, 3,4,5-tris(trifluorométhyl)phényle, etc. Généralement, le greffage d'un groupement aryle sur la couche de carbone d'une particule peut être illustré comme au Schéma 1:

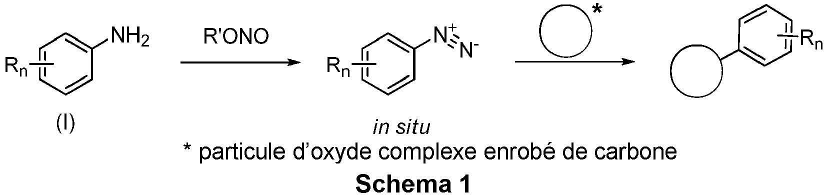

Premièrement, l'amine aromatique réagit avec l'agent de diazotation (par exemple, R'ONO au Schéma 1) et forme un ion diazonium. Cet ion diazonium réagit ensuite avec la surface de carbone d'une particule de matériau de cathode de type olivine enrobée de carbone pour former une particule d'oxyde complexe enrobée de carbone et greffée d'un groupement aryle par une liaison carbone-carbone covalente. Les particules d'oxyde complexe enrobées de carbone peuvent être déjà présentes dans le milieu réactionnel (c'est-à-dire que l'ion diazonium étant formé *in situ*) et réagir avec l'ion diazonium à mesure qu'il se forme.

À ce titre, l'étape de greffage du procédé peut comprendre les étapes consistant à:
(a) génération d'un ion diazonium d'une aniline correspondant à la Formule (II): 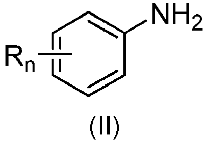 dans laquelle R et n sont tels que définis ci-dessus;
   en présence d'un agent de diazotation; et
(b) réaction de l'ion diazonium généré à l'étape (a) avec la couche de carbone d'un matériau électrochimiquement actif.

L'étape de greffage peut aussi être accomplie par électroréduction d'un ion diazonium généré à partir d'une aniline de Formule (II).

Dans l'une quelconque des étapes de greffage ci-dessus, l'ion diazonium peut être généré *in situ.* L'ion diazonium peut aussi être généré dans un milieu réactionnel avant l'addition du matériau électrochimiquement actif dans celui-ci. Dans l'alternative, l'ion diazonium peut être généré avant son addition au milieu réactionnel comprenant le matériau électrochimiquement actif. Par exemple, l'ion diazonium fraîchement formé peut être ajouté en une portion ou au goutte-à-goutte au milieu réactionnel contenant le matériau électrochimiquement actif.

L'agent de diazotation peut être un agent comprenant un nitrite ou un ion nitrite généré *in situ.* Par exemple, l'agent de diazotation (R'ONO) est un sel de nitrite (par exemple, R' est un cation comme Na⁺ et ONO est NO₂⁻) ou un alkylnitrite (par exemple, où R' est un groupe alkyle) comme l'isoamylnitrite ou le tert-butylnitrite, de préférence le tert-butylnitrite. L'agent de diazotation peut aussi être l'ion NO₂⁻ généré *in situ* par la réduction électrocatalytique d'un ion nitrate (NO₃⁻). Un agent réducteur peut aussi être ajouté afin de promouvoir la réduction de l'ion diazonium formé (par exemple, l'acide phosphoreux).

L'étape de greffage peut être accomplie durant une période de 16 heures ou moins, ou de 2 à 12 heures, ou de 2 à 8 heures, limites incluses. Le greffage peut aussi être accompli à une température entre 0°C et la température ambiante, limites incluses. De préférence, l'étape de greffage est effectuée sous atmosphère inerte, tel que sous argon ou azote. L'étape de greffage peut être effectué dans un solvant polaire, des exemples duquel incluant, sans limitation, l'acétonitrile, l'eau, un carbonate (par exemple, le carbonate de propylène, le carbonate d'éthylène, ou un carbonate de dialkyle), le diméthylsulfoxyde ou toute combinaison de ce qui précède.

Le procédé peut aussi comprendre, en outre, une étape de séchage du matériau greffé sous pression réduite à une température d'environ 50°C à environ 110°C pour un période de temps d'au moins 12 h, de préférence à environ 70°C. La concentration de l'aniline dans le milieu réactionnel peut se situer dans l'intervalle d'environ 2 mmol/L à environ 200 mmol/L, ou d'environ 20 à environ 160 mmol/L. L'agent de diazotation peut être utilisé dans un intervalle de 1 à 3 équivalents molaires par rapport à l'aniline, par exemple de 1 à 2 équivalents. Le matériau électrochimiquement actif peut être utilisé dans le milieu réactionnel à une concentration d'environ 5 g/L à environ 50 g/L, par exemple à environ 30 g/L.

Le matériau greffé obtenu par le procédé décrit ci-dessus peut aussi être relithié par mise en contact du matériau greffé avec des ions lithium, par exemple, avec un excédent molaire d'ions lithium en solution. Par exemple, le matériau greffé est traité avec une solution contenant un excès d'un sel de lithium, tel qu'une solution d'iodure de lithium, de préférence sous atmosphère inerte (par ex. sous argon). Par exemple, le matériau greffé peut être isolé et séché avant relithiation, ou peut être relithié *in situ* suivant l'étape de greffage.

La présente technologie concerne aussi un matériau d'électrode préparé par un procédé tel qu'ici défini. Le matériau d'électrode est généralement un matériau électrochimiquement actif greffé, lequel comprend des particules d'oxyde complexe enrobées de carbone, l'enrobage de carbone du matériau greffé étant lié par liaison covalente carbone-carbone à un groupement aryle de Formule (I). Le matériau d'électrode peut être caractérisé en ce que au moins 0.1 % par poids d'un groupement aryle de Formule (I), par rapport au poids total du matériau d'électrode, est greffé à la couche de carbone du matériau électrochimiquement actif. Par exemple, environ 0.1% en poids à environ 1.5% en poids, ou environ 0.1% en poids à environ 0.8% en poids, ou environ 0.5% en poids à environ 1.2% en poids, ou environ 0.3% en poids à environ 1% en poids, ou environ 0.4% en poids à environ 0.9% en poids, ou environ 0.5% en poids à environ 0.8% en poids de groupement aryle est greffé. Il convient de noter que, malgré un taux de greffage relativement bas (par exemple 0,5 à 0,8 en poids%), un effet macroscopique de la modification peut être observé. Tel qu'illustré à l'Exemple 2, le greffage de particules de LFP enrobées de carbone protège le LFP contre l'humidité. La nouvelle couche organique n'a également pas d'effets indésirables sur le cyclage d'une batterie.

Par exemple, le matériau greffé obtenu comprend un oxyde complexe de Formule Li_{z}FePO₄, où z est supérieur ou égal à 0.6, par exemple z se situe dans l'intervalle d'environ 0.6 à environ 0.9. Le matériau d'électrode obtenu peut être caractérisé en ce que, après agitation dans l'eau pour une durée d'environ 50 heures à température ambiante, Δz se situe entre environ 0.05 et 0, de préférence entre environ 0.02 et 0, Δz étant la variation de z entre la valeur initiale (du matériau greffé) et la valeur de z après le traitement aqueux. De façon similaire, le matériau d'électrode obtenu est caractérisé en ce que, après agitation dans l'eau pour une durée d'environ 18 heures à 60°C, Δz se situe entre environ 0.07 et 0, de préférence entre environ 0.04 et 0, Δz étant défini tel que précédemment.

Le matériau d'électrode obtenu peut aussi être caractérisé en ce que, après traitement dans une solution 1M de LiPF₆ dans EC:DC:DCM (1:1:1) à une concentration d'environ 50 mg de poudre par 10 mL de solution, sous atmosphère inerte durant un mois, la teneur en métal de transition dissout dans la solution est inférieure à 10 ppm, par exemple environ 6 ppm pour le fer lorsque le C-LFP greffé est utilisé, ce qui consiste en une perte de moins de 5%.

La présente technologie concerne aussi une électrode comprenant une couche ou un film d'un matériau d'électrode sur un collecteur de courant, où le matériau d'électrode est tel que défini dans l'un ou l'autre des modes de réalisation ici définis, ou est tel qu'obtenu par l'un des procédés ici décrits. Par exemple, l'électrode est une cathode. La couche de matériau d'électrode peut être sous la forme d'un composite et comprendre, en outre, des additifs tels qu'un liant, par exemple, un liant polymère (par ex. PVDF, PTFE ou CMC-Na) ou un caoutchouc naturel ou synthétique, des sels de lithium et/ou des matériaux de conduction additionnels comme un matériau de carbone (par ex. graphite, graphène, fibres de carbone (par ex. VGCF), noir d'acétylène, noir de charbon tel que noir Ketjen™, etc.).

L'électrode ci-dessus peut aussi être comprise dans une cellule électrochimique lorsque combinée avec une contre-électrode, et un électrolyte. Par exemple, l'électrolyte peut être un électrolyte liquide ou gel, lequel peut comprendre un sel de lithium dans un solvant tel que le carbonate d'éthylène, le carbonate de propylène, un carbonate de dialkyle, ou une combinaison de deux ou plusieurs de ceux-ci (par ex. un mélange de EC:DC:DCM). Des exemples de sels de lithium comprennent, sans limitation, LiPF₆, LiBF₄, LiAsF₆, LiClO₄, LiCF₃SO₃, Li(CF₃SO₂)₂N (LiTFSI), et Li(C₂F₅SO₂)₂N (LiBETI). L'électrolyte gel peut comprendre, en outre, un polymère qui forme un gel, par exemple, lors d'une initiation par irradiation ou par cyclage de la cellule. Comme autre exemple, l'électrolyte peut être un électrolyte polymère solide, par exemple, comprenant un polymère conducteur ionique réticulé et ramifié tel qu'un polymère en étoile à base d'oxyde d'éthylène et de groupes réticulables, tels que les acrylates et les méthacrylates.

### EXEMPLES

Les exemples non limitatifs suivants ont pour but d'illustrer la présente technologie. Sauf indication contraire, tous les nombres exprimant des quantités de réactifs et de produits de départ, des conditions réactionnelles, des concentrations, des propriétés et ainsi de suite, utilisés dans la description et les revendications doivent être compris comme étant modifiés dans tous les cas par le terme "environ". À tout le moins, chaque paramètre numérique doit au moins être interprété à la lumière du nombre de chiffres significatifs rapportés et par l'application des techniques d'arrondissement usuelles. Les valeurs numériques décrites dans les exemples spécifiques sont, toutefois, rapportés aussi précisément que possible. Toute valeur numérique contiendra, de façon inhérente, certaines erreurs résultant de variations dans les conditions expérimentales, dans les mesures et dans l'équipement utilisé.

La présente technologie concerne aussi de nouveaux matériaux et leurs méthodes de préparation. La personne versée dans l'art reconnaîtra rapidement les variantes appropriées aux modes opératoires comme dans les produits de départ, les conditions réactionnelles et les techniques utilisées. Les matériaux de départ et solvants utilisés dans les exemples qui suivent sont, de manière générale, obtenus de sources commerciales connues, telles que Sigma-Aldrich Co. Le LiFePO₄ enrobé de carbone peut être préparé selon les méthodes connues.

### Exemple 1 - Préparation de matériaux d'électrode

Les Exemples 1.1 à 1.6 illustrent des méthodes pour la préparation de poudres de LiFePO₄ enrobé de carbone greffées et hydrophobes.

### 1.1. C-LFP greffé (40 mmol/l 4-CF₃aniline et 1eq tert-butylnitrite)

Du LiFePO₄ enrobé de carbone avec une surface de 15-18 m²/g a été utilisé. Typiquement 1.5 g de C-LiFePO₄ a été dispersé dans 50 mL d'acétonitrile (HPLC grade), suivi par l'addition de 0.254 mL de 4-trifluorométhylaniline. Le mélange a été agité jusqu'à dissolution complète de l'amine et soniqué pendant 10 min. Après addition de 0.264 mL de tert-butylnitrite, l'ion diazonium du 4-trifluoromethylbenzène généré *in situ* a été formé, lequel a réagi avec la surface de carbone du C-LiFePO₄. Le mélange résultant a été agité pendant la nuit à température ambiante. Le mélange a ensuite été filtré sous vide en utilisant un assemblage de type Buchner et un filtre de Nylon™ ayant une taille de pores de 0.47 µm. La poudre modifiée a été lavée successivement avec un excès d'acétonitrile, de DMF, de méthanol et d'acétone. Finalement, la poudre modifiée a été séchée sou vide à 70°C pendant au moins 12 heures.

### 1.2. C-LFP greffé (160 mmol/l 4-CF₃aniline et 1eq tert-butylnitrite)

Le LiFePO₄ enrobé de carbone de cet exemple a été préparé suivant la procédure décrite à l'Exemple 1.1; à l'exception que 1.02 mL de 4-trifluorométhylaniline et 1.06 mL of tert-butylnitrite ont été utilisés.

### 1.3. C-LFP greffé (40 mmol/l 4-CF₃aniline et 2eq tert-butylnitrite)

Le LiFePO₄ enrobé de carbone de cet exemple a été préparé suivant la procédure décrite à l'Exemple 1.1; à l'exception que 0.529 mL de tert-butylnitrite a été utilisé.

### 1.4. C-LFP greffé (160 mmol/l 4-CF₃aniline et 2eq tert-butylnitrite)

Le LiFePO₄ enrobé de carbone de cet exemple a été préparé suivant la procédure décrite à l'Exemple 1.1; à l'exception que 1.02 mL de 4-trifluorométhylaniline et 2.12 mL de tert-butylnitrite ont été utilisés.

### 1.5. C-LFP greffé (40 mmol/l 4-CF₃aniline et 3eq tert-butylnitrite)

Le LiFePO₄ enrobé de carbone de cet exemple a été préparé suivant la procédure décrite à l'Exemple 1.1; à l'exception que 0.793 mL de tert-butylnitrite a été utilisé. Pour cet exemple, le LiFePO₄ enrobé de carbone contient, après greffage, 0.55% en poids de molécules greffées. Cependant, lorsqu'évaluées par analyse thermogravimétrique et mesures ICP-AES, la poudre présente 20% d'oxydation après la réaction de greffage possiblement dû au procédé de réduction des ions diazonium du 4-trifluoromethylbenzène générés *in situ,* à la surface du carbone.

### 1.6. C-LFP greffé (160 mmol/l 4-CF₃aniline et 3ea tert-butylnitrite)

Le LiFePO₄ enrobé de carbone de cet exemple a été préparé suivant la procédure décrite à l'Exemple 1.1; à l'exception que 1.02 mL de 4-trifluorométhylaniline et 3.18 mL de tert-butylnitrite ont été utilisés. Pour cet exemple, le LiFePO₄ enrobé de carbone contient, après greffage, 0.78% en poids de molécules greffées. Cependant, lorsqu'évaluées par analyse thermogravimétrique et mesures ICP-AES, la poudre présente 30% d'oxydation après la réaction de greffage possiblement dû au procédé de réduction des ions diazonium de 4-trifluoromethylbenzène générés *in situ*, à la surface du carbone.

### Exemple 2 - Analyse des propriétés

### 2.1 Propriétés du C-LFP greffé

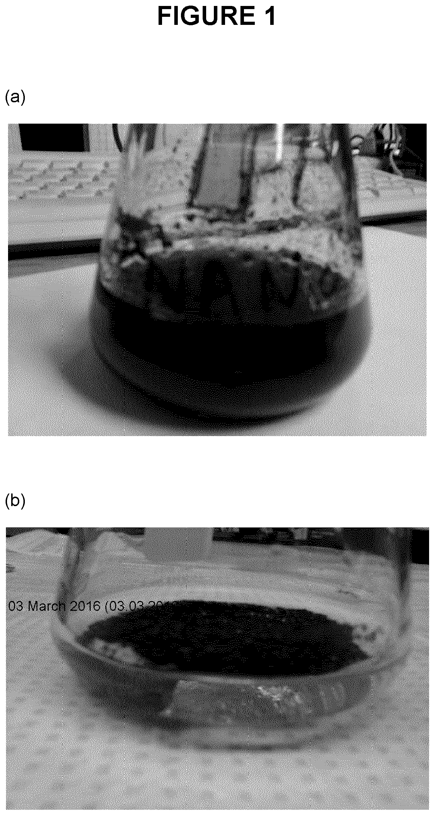

La réaction d'une suspension de C-LFP dans l'acétonitrile avec des ions diazonium générés *in situ* ions comme dans les exemples ci-dessus conduits à un taux de greffage se situant dans l'intervalle d'environ 0.5% à environ 0.8% selon l'analyse thermique. D'un point de vue macroscopique, la fonctionalisation permet d'obtenir une poudre hydrophobe (voir Figure 1). En fait, la poudre C-LFP non modifiée (Figure 1(a)) montre une suspension dans l'eau tandis que la poudre C-LFP modifiée reste à la surface et ne se mélange pas même après agitation magnétique (Figure 1(b)). La réaction de greffage elle-même est accompagnée de l'oxydation partielle de la poudre. L'analyse de la teneur en lithium par ICP-AES (voir Tableau 1) montre que les échantillons modifiés contiennent environ 28% de phase délithiée.

**Tableau 1. Teneur en lithium de poudres modifiée et non modifiée par ICP-AES**

| Échantillon | X dans Li_{X}FePO₄ |
|---|---|
| C-LFP non modifié | 1 |
| C-LFP modifié | 0.72 |

### 2.2 Protection de C-LFP contre l'eau

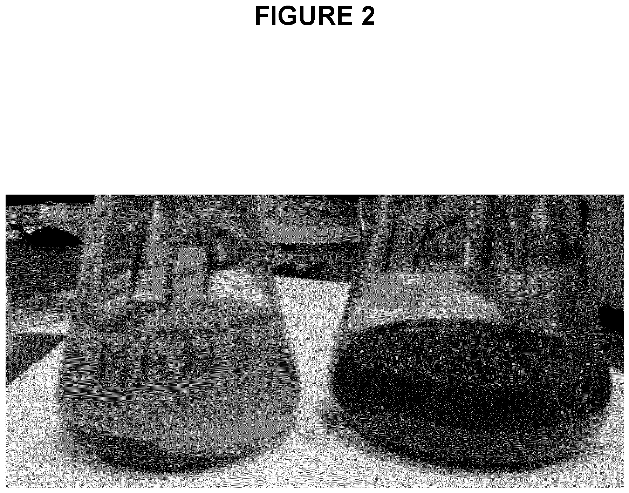

Après agitation pendant 24h à température ambiante, une portion de l'enrobage de carbone du C-LFP non modifié est détériorée (Figure 2, flacon de gauche). Du LFP sans enrobage de carbone est ainsi retrouvé après filtration et une oxydation partielle de la poudre est observée. Dans le cas de la poudre de C-LFP modifiée, la protection contre l'eau est bien confirmée (Figure 2, flacon de droite).

La méthode d'analyse de la teneur en lithium de l'Exemple 2.1 a aussi été utilisée afin d'estimer la quantité de lithium retirée des poudres en contact avec l'eau sous diverses conditions.

Tel que montré au Tableau 2, après avoir été en contact avec l'eau durant 50 heures à température ambiante, le C-LFP non-modifié était partiellement oxydé. D'autres techniques (analyse thermogravimétrique, spectroscopie infrarouge) ont aussi confirmé que l'enrobage de carbone avait été perdu. Après traitement à 60°C pendant 18 heures, la poudre non modifiée avait un niveau similaire d'oxydation et la dégradation de l'enrobage de carbone avait augmentée.

Pour l'échantillon modifié, après 50 heures à température ambiante ou après 18h à 60°C dans l'eau, seulement une petite quantité de lithium était désinseré du C-LFP en comparaison du contenu initial.

**Tableau 2. Teneur en lithium de poudres modifiées et non-modifiées par ICP-AES**

| Échantillon | z dans Li_{z}FePO₄ | \|Δz\| |
|---|---|---|
| C-LFP non-modifié | 1 | - |
| C-LFP non-modifié, 50h, RT | 0.66 | 0.34 |
| C-LFP non-modifié, 18h, 60 °C | 0.71 | 0.29 |
| C-LFP modifié | 0.72 | - |
| C-LFP modifié, 50h, RT | 0.70 | 0.02 |
| C-LFP modifié, 18h, 60 °C | 0.68 | 0.04 |

### 2.3 Taux de dissolution du fer de C-LFP greffé dans l'électrolyte

La dissolution du métal de transition (fer pour C-LFP) est l'un des effets indésirables, qui se produit lors du cyclage des batteries. La présence de traces d'eau soit dans le matériau électrochimiquement actif ou dans l'électrolyte, mène rapidement à la formation d'acide fluorhydrique (HF), causant une dissolution du métal de transition. Afin d'étudier la dissolution du fer dans l'électrolyte, 50 mg de poudre modifiée ou non modifiée sont ajoutés à 10mL d'une solution 1M de LiPF₆ dans EC:DC:DMC (1:1:1) et conservé sous argon durant 1 mois. Après filtration, l'électrolyte est analysé par absorption atomique afin de déterminee sa concentration en fer. Les concentrations en fer dans l'électrolyte pour C-LFP modifié et non modifié sont présentées au Tableau 3. Une concentration en fer plus petite pour l'échantillon modifié démontre que la modification de surface prévient aussi la dissolution du métal de transition.

**Tableau 3. Fe dissout dans 1M LiPF₆ EC:DC:DMC (1:1:1) après immersion d'un mois**

| **Échantillon** | **Fe dans l'électrolyte (ppm)** |
|---|---|
| C-LFP non-modifié | 13 |
| C-LFP modifié | 6 |

Les valeurs correspondent à 9.1% de fer pour le C-LFP non-modifié qui est dissout dans la solution électrolyte comparé à 4.6% pour le C-LFP modifié.

### Exemple 3 - Relithiation du matériau d'électrode

La relithiation des échantillons modifiés est possible. Une solution de 0.5M d'iodure de lithium (Li:Fe = 6:1) dans l'acétonitrile a été utilisée pour relithier les échantillons. La réaction a été effectuée pendant 24h sous argon.

### Exemple 4 - Préparation de matériaux additionnels d'électrode

Quatre poudres, dénotées de TFN₁ à TFN₄, ont été préparées selon les conditions expérimentales présentées dans le Tableau 4 (C-LFP : C-LiFePO₄ non modifié). Afin de maximiser le greffage des groupements trifluorométhylephényle à la surface du matériau de cathode, 3 équivalents de tert-butyl nitrite ont été utilisés bien qu'il a été montré que ce dernier oxyde partiellement le C-LiFePO₄.

Le tableau 4 présente aussi les propriétés des matériaux obtenus, incluant leur taux de molécules greffées (en pourcentage massique) ainsi que leur taux d'oxydation déterminé par analyse thermogravimétrique (ATG) et par ICP.

**Tableau 4. LiFePO4 modifié, taux de greffage (% massique) et taux d'oxydation**

| **Échantillon** | **Amine (mmol)** | **t-Bu-nitrite (mmol)** | **Taux greffage (%) par ATG** | **z dans Li_{z}FePO₄ par ATG** | **z dans Li_{z}FePO₄ par ICP** |
|---|---|---|---|---|---|
| C-LFP | - | - | - | 0 | ∼0 |
| TFN₁ | 2 | 6 | 0.55 | 0.8 | 0.8 |
| TFN₂ | 4 | 12 | 0.6 | 0.73 | 0.75 |
| TFN₃ | 6 | 18 | 0.71 | 0.74 | 0.73 |
| TFN₄ | 8 | 24 | 0.78 | 0.68 | 0.72 |

La présence des groupements trifluorométhylphényle greffés dans l'échantillon TFN₄ est aussi confirmée par un pic à 293eV associé à la liaison C-F en spectroscopie du photoélectron-X (XPS). Ce pic est absent du matériau C-LFP non modifié. La présence d'un large pic centré à 688 eV sur le spectre de cœur F 1s de l'échantillon TFN₄ démontre aussi la présence des groupements greffés.

### Exemple 5 - Taux d'oxydation et taux de greffage

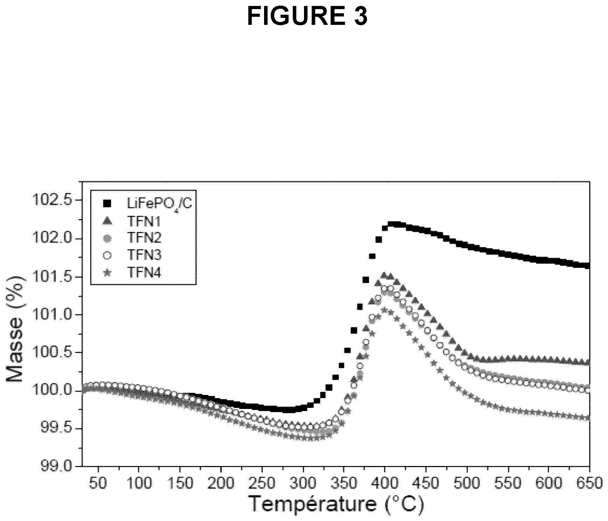

La figure 3 présente les courbes d'analyse thermogravimétrique du LiFePO₄/C (C-LFP) non modifié et des 4 poudres modifiées de l'Exemple 4. Le matériau d'origine présente un gain de masse d'approximativement 2.5% entre 300 et 400 °C suivi par une perte de masse de 0.6% entre 400 et 600 °C. L'oxydation du matériau engendre la formation de Li₃Fe₂(PO₄)₃ et de Fe₂O₃ menant au gain de masse enregistré. La poudre est en effet totalement orange en fin d'expérience, couleur typique de l'hématite (Fe₂O₃). La perte de masse suivante est associée à la dégradation de la couche de carbone enrobant les particules de LiFePO₄.

Le départ du gain de masse apparaît à des températures plus élevées (environ 50 °C) pour les échantillons greffés par rapport à la poudre non modifiée. L'augmentation de la stabilité thermique du LiFePO₄/C greffé serait associée à la modification de surface elle-même. Une autre différence réside dans le gain de masse, beaucoup plus faible pour les poudres modifiées. De plus, lorsque la concentration en précurseurs (ex. amine et tert-butyl nitrite) augmente (voir tableau 4), le gain de masse devient plus faible. Cette observation suggère que la poudre modifiée est davantage oxydée lorsque la concentration en précurseurs est augmentée. L'estimation du taux d'oxydation peut être faite en considérant que les 2.5% du gain de masse pour le LiFePO₄/C non modifié correspondent à 100% de l'oxydation. Les valeurs trouvées ont été rassemblées dans le tableau 4 (par ATG). Ces résultats sont très similaires à ceux obtenus par analyse chimique du lithium après digestion acide des poudres (par ICP) et révèlent des taux d'oxydation allant de 20 à 32%.

### Exemple 6 - Stabilité dans l'eau

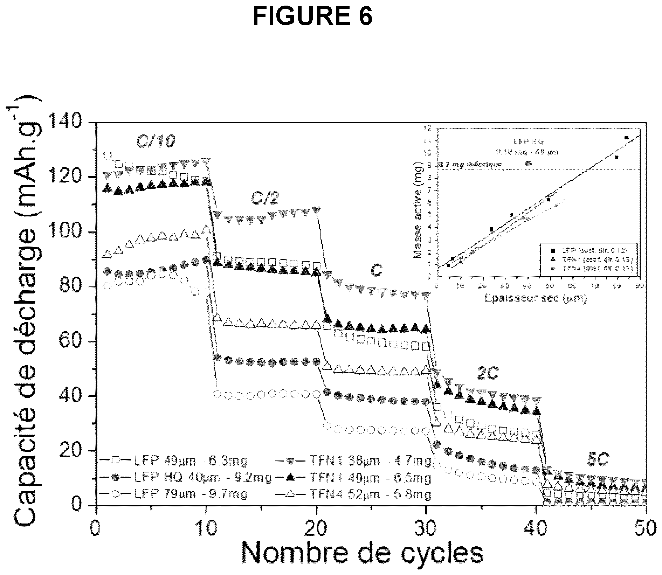

Afin de mettre en évidence le caractère hydrophobe de la poudre fonctionnalisée, le LiFePO₄/C modifié (TFN₄) et non modifié ont été dispersés et agités dans l'eau distillée, à température ambiante pendant 24 h. Le LiFePO₄/C d'origine se disperse facilement dans l'eau. Au contraire, après modification du matériau, la poudre reste à la surface de l'eau et se mélange très difficilement, même sous une forte agitation. En fait, la poudre TFN₄ dispersée dans l'eau reste à sa surface même pendant l'agitation. Après 24 h d'agitation modérée, la poudre TFN₄ se retrouve en suspension, alors que pour le LiFePO₄/C non modifié (figure 6.8c), le matériau se retrouve au fond du récipient et la solution est de couleur marron claire avec à sa surface des résidus de l'enrobage de carbone.

La poudre marron du LiFePO₄/C non modifié a été récupérée par filtration et centrifugation pour être analysée. Davantage de cette poudre a été obtenue lorsque l'expérience fût réalisée à 60 °C pendant 1 8 h avec le LiFePO₄/C non modifié tandis qu'aucun changement discernable n'a été observé avec la poudre modifiée. Le diffractogramme de la poudre marron (non montré), montre des pics correspondant à LiFePO₄.

L'analyse thermogravimétrique couplée à la spectrométrie de masse a été utilisée pour caractériser cette poudre marron. Dans le spectre de masse du LiFePO₄/C d'origine, la décomposition de l'enrobage de carbone sous air donne lieu à un large pic entre 350 et 500 °C associé à la production de CO₂ (m/z = 44). Pour la poudre marron, il n'y a pas de pic sur la plage de température étudiée. Ce résultat montre que la réaction entre l'eau et le LiFePO₄/C non modifié a détérioré l'enrobage de carbone du matériau de cathode. Ceci corrobore avec la présence d'une suspension noire de carbone en surface de l'eau après les 24 h de réaction. Au contraire, le greffage de groupements hydrophobes a permis de préserver la couche de carbone (pas de poudre marron récupérée) et ainsi de protéger plus longuement le matériau de l'oxydation.

### Exemple 7 - Analyse du caractère hydrophobe

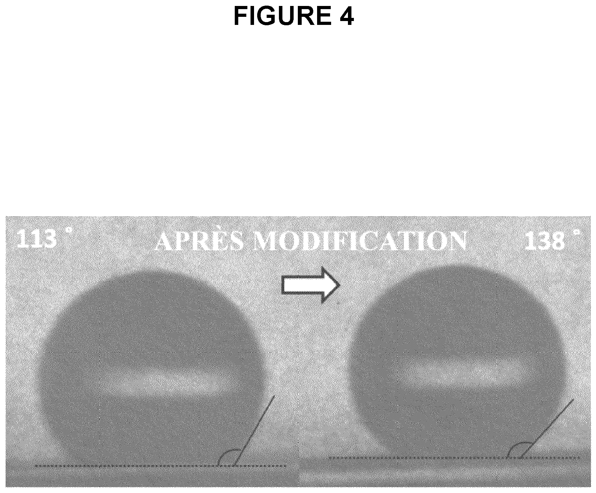

Afin de confirmer le caractère hydrophobe de la poudre et aussi du composite qui constitue l'électrode utilisée durant les cyclages galvanostatiques, l'angle de contact d'une goutte d'eau à la surface des électrodes comprenant le matériau modifié et non modifié a été estimé. La figure 4 montre une photographie de l'électrode de LiFePO₄/C non modifié (gauche) et modifié (droite).

Du fait de la présence de PVDF comme liant dans la composition de l'électrode (10% massique), les angles de contact, même pour la cathode de LiFePO₄/C non modifié sont assez élevés. Cependant, après réaction de greffage, l'angle de contact augmente de 113 à 138°, démontrant que la cathode de matériau modifié est bien plus hydrophobe que celle comprenant du LiFePO₄/C non modifié. Ces résultats montrent bien que la méthode de fabrication des électrodes n'altère pas le matériau modifié et permet de conserver les propriétés du LiFePO₄/C fonctionnalisé.

### Exemple 8 - Relithiation des poudres modifiées

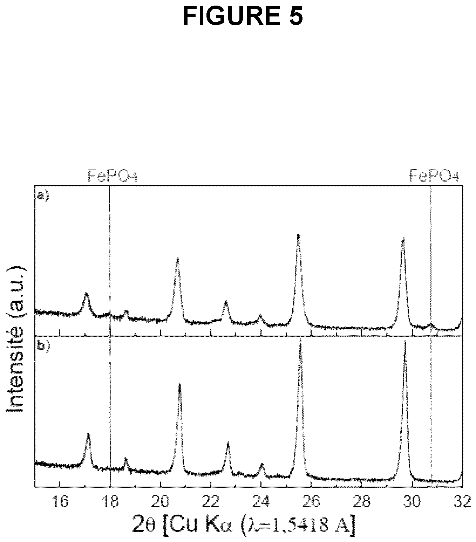

Le protocole de l'Exemple 3 a été employé pour la relithiation de la poudre de LiFePO₄/C modifiées TFN₁ de l'Exemple 4. Le diffractogramme de la poudre TFN₁ relithiée est présenté à la figure 5(b). En comparaison à la poudre TFN₁ avant relithiation (figure 5(a)), il est clair que la phase délithiée a complètement disparu après réduction chimique. Les faibles pics de FePO₄ ne sont plus présents et ceux de LiFePO₄ sont beaucoup plus intenses, phénomène inverse de ce qui a été constaté après greffage du LiFePO₄/C.

### Exemple 9 - Propriétés électrochimiques

Des électrodes de différentes épaisseurs comprenant les matériaux modifiés TFN₁ et TFN₄ ont été préparées et testées comme cathode dans des piles comprenant une anode de Li₄Ti₅O₁₂. Le matériau d'anode a été fourni sous forme d'une électrode déjà préparée. Un échantillon de cathode de LiFePO₄ (non-modifié) nanométrique a permis de comparer les performances en système complet avec celles obtenues avec les électrodes de la présente demande. Les données importantes pour les deux électrodes de référence (anode et cathode non-modifiée) sont rapportées dans le tableau 5.

**Tableau 5. Données des électrodes de Li₄Ti₅O₁₂ et de LiFePO₄ non modifié**

| **Matériau d'électrode** | **Masse Molaire (g/mol)** | **Matière active (mg)*** | **Matière active (% masse)** | **Autres composantes (% masse)** | **Épaisseur d'électrode (µm)** |
|---|---|---|---|---|---|
| Li₄Ti₅O₁₂ | 459.1 | 8.433 | 82 | PVDF (NA) Noir Ketjen (NA) | 44 |
| LiFePO₄ | 157.7 | 9.190 | 89 | PVDF (5) VGCF (3) Carbone (3) | 40 |

| | | | | | |
|---|---|---|---|---|---|
| * Données pour une électrode découpée en cercle, surface de l'électrode ∼1.767 cm². | | | | | |

Il est à noter que la densité de l'électrode LFP non modifiée 9fournie par Hydro-Québec) est beaucoup plus importante car pour une épaisseur égale de 40 µm, elle contient deux fois plus de matière active. Cette différence s'explique par la méthode de fabrication différente des électrodes de la présente demande, par exemple, le calandrage de la cathode LFP (HQ) a permis d'obtenir une électrode plus dense que la méthode utilisée dans la présente demande (sans calandrage). Une méthode d'épandage telle que celle utilisée pour LFP permettrait aussi d'obtenir des électrodes plus dense avec les présents matériaux. L'électrode LFP non-modifiée fournie a tout de même été utilisée dans les analyses électrochimiques comme comparatif. Une autre électrode de référence, comprenant du LFP non modifié mais utilisant la même technique que pour la préparation des électrodes de matériaux modifié, a aussi été préparée pour fins de comparaison.

Les performances électrochimiques de toutes les cathodes modifiées et non modifiées préparées et du LFP (HQ) ont été comparées, pour des épaisseurs d'électrodes et masses actives similaires, des épaisseurs similaires avec des masses actives différentes et enfin des masses actives similaires avec des épaisseurs différentes (voir figure 6). Afin de limiter l'effet de l'épaisseur de la cathode sur les performances électrochimiques, les cathodes dont l'épaisseur est comprise entre 30 et 50 µm ont été comparées. Trois d'entre elles sont relativement proches en épaisseur (∼50 µm) et en masse active (6-6.5 mg) et fabriquées à partir des 2 poudres modifiées (TFN₁ et TFN₄) et du LiFePO₄ non modifié. Ainsi, l'effet du greffage peut être déterminé. Le LFP HQ (•) est comparé à une cathode de LiFePO₄ (○), ayant environ la même masse active mais une épaisseur différente, et à une cathode de TFN₁ (▼) ayant la même épaisseur mais une masse active différente.

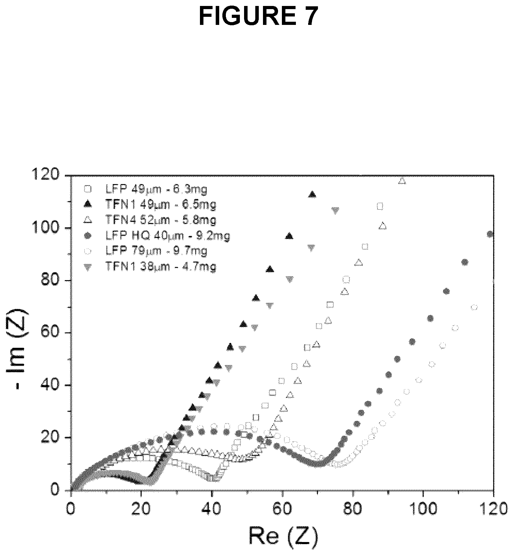

Les 3 cathodes de masses actives et épaisseurs similaires montrent des valeurs de capacité spécifique assez semblables pour TFN₁ et LiFePO₄ avec une meilleure rétention de capacité pour TFN₁ lorsque la vitesse de cyclage est augmentée. Ce comportement est attribué à la modification de surface qui semble fournir une électrode plus homogène tel que le montre le diagramme de Nyquist de la figure 7. En effet, les résistances de transfert de charge (diamètre du demi-arc de cercle) pour les cathodes de TFN₁ sont les plus faibles enregistrées. Ainsi, la cathode de TFN₁ de 38 µm d'épaisseur est celle qui présente les meilleures performances électrochimiques parmi toutes celles présentées, suivi par l'électrode de TFN₁ de 49 µm. Pour la cathode de TFN₄, les capacités spécifiques obtenues sont légèrement inférieures ou similaires à celle de la cathode de LiFePO₄ (49µm-6.3mg). Ceci est associé à la résistance de transfert de charge plus importante que celle de la cathode de LiFePO₄. Par contre, le matériau TFN₄ est mieux protégé contre l'humidité que le matériau de la cathode LiFePO₄ (49µm-6.3mg).

La figure 7 montre que plus l'épaisseur de l'électrode est importante (○) plus la résistance de transfert de charge est importante (pour un même matériau). Ainsi, pour des électrodes trop épaisses le film devient de plus en plus résistant et de faibles capacités spécifiques sont obtenues, comme montré à la figure 7 pour la cathode de LiFePO₄ de 79 µm d'épaisseur. Cependant, pour le LFP HQ (•) avec une épaisseur deux fois moins importante, un demi-arc de cercle très semblable est visible sur le diagramme de Nyquist et les capacités spécifiques en décharge sont proches de celles obtenues avec la cathode de LiFePO₄ de 79 µm d'épaisseur (figure 6). Sachant qu'il s'agit d'une électrode calandrée, son épaisseur devait sans doute être beaucoup plus importante au départ. Ceci expliquerait pourquoi un tel demi-arc de cercle est observé pour cette électrode, même si à l'origine le calandrage sert à favoriser la cohésion entre la matière et l'adhésion au collecteur de courant pour obtenir des électrodes plus denses.

## Revendications

1. Procédé de préparation d'un matériau d'électrode, le procédé comprenant une étape de greffage, sur un matériau électrochimiquement actif, d'un groupement aryle de Formule (I): 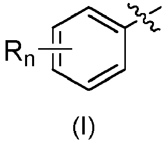 dans laquelle,
R est, indépendamment à chaque occurrence, un groupe hydrophobe choisi parmi un atome de fluor et un groupe C₁₋₁₂alkyle substitué ou non-substitué; et
n est un nombre entier choisi parmi 1 à 5;
dans lequel le matériau électrochimiquement actif comprend des particules d'oxyde complexe enrobées d'une couche de carbone, et dans lequel ledit greffage se produit sur la couche de carbone, la couche de carbone formant un enrobage uniforme et adhérent sur les particules d'oxyde complexe;
dans lequel le greffage comprend les étapes de:
(a) génération d'un ion diazonium à partir d'une aniline de Formule (II): 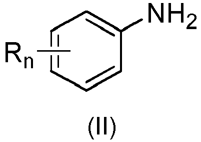 dans laquelle R et n sont tels que définis ci-dessus;
en présence d'un agent de diazotation, de préférence un sel de nitrite ou un alkylnitrite; et
(b) réaction de l'ion diazonium généré à l'étape (a) avec la couche de carbone du matériau électrochimiquement actif.

2. Procédé selon la revendication 1, dans lequel l'ion diazonium est (i) généré *in situ*; (ii) généré dans un milieu réactionnel avant l'addition du matériau électrochimiquement actif audit milieu réactionnel; ou (iii) généré avant son addition au milieu réactionnel comprenant le matériau électrochimiquement actif.

3. Procédé selon la revendication 1 ou 2, le procédé comprenant, en outre, une étape de réduction de l'ion diazonium généré par l'addition d'un agent réducteur.

4. Procédé selon l'une quelconque des revendications 1 à 3, dans lequel R est un groupe C₅₋₁₂alkyle non-substitué ou un groupe C₁₋₃alkyle substitué par un ou plusieurs groupe(s) hydrophobe(s).

5. Procédé selon la revendication 4, dans lequel le groupe hydrophobe est un fluor.

6. Procédé selon l'une quelconque des revendications 1 à 5, dans lequel n est 1, 2, ou 3.

7. Procédé selon l'une quelconque des revendications 1 à 3, dans lequel le groupement aryle de Formule (I) est le 4-triflorométhylphényle.

8. Procédé selon l'une quelconque des revendications 1 à 7, dans lequel l'oxyde complexe est un matériau de type olivine de Formule (III):
LiMPO₄ (III)
dans laquelle M est au moins l'un de Fe, Co, Ni, et Mn; ou
dans laquelle M est M'ₓM"_{y} où x + y =1, dans laquelle M' et M" sont chacun de manière indépendante choisis parmi Fe, Co, Ni, et Mn.

9. Procédé selon la revendication 8, dans lequel l'oxyde complexe est LiFePO₄, LiCoPO₄, LiMnPO₄, ou LiFeₓMn_{y}PO₄ où 0<x,y<1 et x+y=1.

10. Procédé selon l'une quelconque des revendications 1 à 7, dans lequel l'oxyde complexe est un titanate ou un titanate de lithium ou l'oxyde complexe est Li₄Ti₅O₁₂.

11. Procédé selon l'une quelconque des revendications 1 à 10, lequel comprend au moins l'une des conditions suivantes :
- le greffage est effectué durant une période de 16 heures ou moins, ou de 2 à 12 heures, ou de 2 à 8 heures, bornes incluses ;
- le greffage est effectué à une température entre 0°C et la température ambiante, bornes incluses;
- le greffage est effectué sous atmosphère inerte, tel que sous argon ou azote; et/ou
- le greffage est effectué dans un solvant polaire, de préférence le solvant polaire comprend l'acétonitrile, l'eau, un carbonate (par exemple carbonate de propylène, carbonate d'éthylène, ou un carbonate de dialkyle), du diméthylsulfoxyde, ou une combinaison de deux ou plus de ceux-ci.

12. Procédé selon l'une quelconque des revendications 1 à 11, comprenant, en outre, une étape de séchage du matériau greffé sous pression réduite à une température d'environ 50°C à environ 110°C pour un temps d'au moins 12 h, de préférence à environ 70°C.

13. Procédé selon l'une quelconque des revendications 1 à 12, dans lequel :
- l'aniline est utilisée à une concentration variant d'environ 2 à environ 200 mmol/L, ou d'environ 20 à d'environ 160 mmol/L;
- la quantité d'agent de diazotation utilisée est situé dans l'intervalle de 1 à 3 équivalents molaires par rapport à l'aniline, par exemple de 1 à 2 équivalents; et/ou
- le matériau électrochimiquement actif est utilisé dans un milieu réactionnel à une concentration se situant dans l'intervalle d'environ 5 g/L à environ 50 g/L.

14. Procédé selon l'une quelconque des revendications 1 à 13, comprenant en outre, une étape de relithiation du matériau d'électrode par contact du matériau greffé avec des ions lithium.

15. Un matériau d'électrode préparé par le procédé tel que défini dans l'une quelconque des revendications 1 à 14, **caractérisé en ce que** le matériau d'électrode comprend au moins 0.1 % en poids de groupe aryle greffé, par rapport au poids total du matériau d'électrode, de préférence **caractérisé en ce que** le matériau d'électrode comprend de 0.5 % en poids à 0.8 % en poids de groupe aryle greffé, par rapport au poids total du matériau d'électrode.

16. Une électrode comprenant une couche ou un film comprenant le matériau d'électrode tel que défini dans la revendication 15, sur un collecteur de courant.

17. Électrode selon la revendication 16, comprenant en outre un liant polymère.

18. Une cellule électrochimique comprenant une électrode telle que définie dans la revendication 16 ou 17, un électrolyte et une contre-électrode.

19. Cellule électrochimique selon la revendication 18, dans laquelle l'électrolyte est un électrolyte liquide ou gel comprenant un sel de lithium dans un solvant.

20. Cellule électrochimique selon la revendication 18, dans laquelle l'électrolyte est un électrolyte polymère solide, de préférence un électrolyte polymère solide comprenant un polymère réticulable et ramifié conducteur d'ions.

21. Utilisation d'un procédé tel que défini dans l'une quelconque des revendications 1 à 14, pour la protection d'un matériau électrochimiquement actif contre l'humidité.

## Patentansprüche

1. Verfahren zur Herstellung eines Elektrodenmaterials, wobei das Verfahren einen Schritt eines Aufpfropfens einer Arylgruppe der Formel (I) auf ein elektrochemisch aktives Material umfasst: 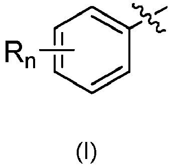 wobei
R unabhängig von jedem Auftreten eine hydrophobe Gruppe ausgewählt aus einem Fluoratom und einer substituierten oder unsubstituierten C1-C12-Alkylgruppe ist; und
n eine ganze Zahl ausgewählt aus 1 bis 5 ist;
wobei das elektrochemisch aktive Material Komplexoxid-Partikel umfasst, die mit einer Kohlenstoffschicht beschichtet sind, und wobei das Pfropfen auf die Kohlenstoffschicht erfolgt, wobei die Kohlenstoffschicht eine gleichmäßige und anhaftende Beschichtung auf den Komplexoxid-Partikeln bildet;
wobei das Pfropfen die Schritte umfasst:
(a) Erzeugen eines Diazoniumions aus einem Anilin der Formel (II): 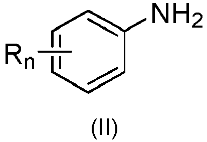 wobei R und n wie oben definiert sind;
in Gegenwart eines Diazotierungsmittels, vorzugsweise eines Nitritsalzes oder eines Alkylnitrits; und
(b) Umsetzen des in Schritt (a) erzeugten Diazoniumions mit der Kohlenstoffschicht des elektrochemisch aktiven Materials.

2. Verfahren nach Anspruch 1, wobei das Diazoniumion (i) *in situ* erzeugt wird; (ii) in einem Reaktionsmedium vor Zugabe des elektrochemisch aktiven Materials zu dem Reaktionsmedium erzeugt wird; oder (iii) erzeugt wird, bevor es zu dem Reaktionsmedium gegeben wird, das das elektrochemisch aktive Material umfasst.

3. Verfahren nach Anspruch 1 oder 2, wobei das Verfahren ferner einen Schritt des Reduzierens des durch Zugabe eines Reduktionsmittels erzeugten Diazoniumions umfasst.

4. Verfahren nach irgendeinem der Ansprüche 1 bis 3, wobei R eine unsubstituierte C₅-₁₂-Alkylgruppe oder eine mit einer oder mehreren hydrophoben Gruppen substituierte C₁-₃-Alkylgruppe ist.

5. Verfahren nach Anspruch 4, wobei die hydrophobe Gruppe ein Fluor ist.

6. Verfahren nach irgendeinem der Ansprüche 1 bis 5, wobei n 1, 2 oder 3 ist.

7. Verfahren nach irgendeinem der Ansprüche 1 bis 3, wobei die Arylgruppe der Formel (I) 4-Trifluormethylphenyl ist.

8. Verfahren nach irgendeinem der Ansprüche 1 bis 7, wobei das Komplexoxid ein Material vom Olivin-Typ der Formel (III) ist:
LiMPO₄ (III)
wobei M mindestens eines von Fe, Co, Ni und Mn ist; oder
wobei M M'ₓM"_{y} ist, wobei x + y = 1, wobei M' und M" jeweils unabhängig voneinander aus Fe, Co, Ni und Mn ausgewählt sind.

9. Verfahren nach Anspruch 8, wobei das Komplexoxid LiFePO₄, LiCoPO₄, LiMnPO₄ oder LiFeₓMn_{y}PO₄ ist, wobei o < x, y < 1 und x + y = 1.

10. Verfahren nach irgendeinem der Ansprüche 1 bis 7, wobei das Komplexoxid ein Titanat oder ein Lithiumtitanat ist oder das Komplexoxid Li₄Ti₅O₁₂ ist.

11. Verfahren nach irgendeinem der Ansprüche 1 bis 10, welches wenigstens eine der folgenden Bedingungen umfasst:
- das Pfropfen wird über einen Zeitraum von 16 Stunden oder weniger oder von 2 bis 12 Stunden oder von 2 bis 8 Stunden durchgeführt, wobei die Grenzwerte eingeschlossen sind;
- das Pfropfen wird bei einer Temperatur zwischen 0°C und Umgebungstemperatur durchgeführt, wobei die Grenzwerte eingeschlossen sind;
- das Pfropfen wird unter einer inerten Atmosphäre, wie unter Argon oder Stickstoff, durchgeführt; und/oder
- das Pfropfen wird in einem polaren Lösungsmittel durchgeführt, vorzugsweise umfasst das polare Lösungsmittel Acetonitril, Wasser, ein Carbonat (zum Beispiel Propylencarbonat, Ethylencarbonat oder Dialkylcarbonat), Dimethylsulfoxid, oder eine Kombination von zwei oder mehr von diesen.

12. Verfahren nach irgendeinem der Ansprüche 1 bis 11, ferner umfassend einen Schritt des Trocknens des gepfropften Materials unter vermindertem Druck bei einer Temperatur von etwa 50°C bis etwa 110°C für einen Zeitraum von mindestens 12 Stunden, vorzugsweise bei etwa 70°C.

13. Verfahren nach irgendeinem der Ansprüche 1 bis 12, wobei:
- das Anilin in einer Konzentration im Bereich von etwa 2 bis etwa 200 mmol/l oder von etwa 20 bis etwa 160 mmol/l verwendet wird;
- die Menge des verwendeten Diazotierungsmittels im Bereich von 1 bis 3 molaren Äquivalenten, bezogen auf das Anilin, liegt, zum Beispiel von 1 bis 2 Äquivalenten; und/oder
- das elektrochemisch aktive Material in einem Reaktionsmedium in einer Konzentration im Bereich von etwa 5 g/l bis etwa 50 g/l verwendet wird.

14. Verfahren nach irgendeinem der Ansprüche 1 bis 13, ferner umfassend einen Schritt des Relithiierens des Elektrodenmaterials durch In-Kontakt-Bringen des gepfropften Materials mit Lithiumionen.

15. Elektrodenmaterial, hergestellt durch das Verfahren wie in irgendeinem der Ansprüche 1 bis 14 definiert, **dadurch gekennzeichnet, dass** das Elektrodenmaterial mindestens 0,1 Gewichts-% gepfropfte Arylgruppe, bezogen auf das Gesamtgewicht des Elektrodenmaterials, umfasst, bevorzugt **dadurch gekennzeichnet, dass** das Elektrodenmaterial 0,5 Gewichts-% bis 0,8 Gewichts-% gepfropfte Arylgruppe umfasst, bezogen auf das Gesamtgewicht des Elektrodenmaterials.

16. Elektrode, umfassend eine Schicht oder einen Film, umfassend das Elektrodenmaterial wie in Anspruch 15 definiert, auf einem Stromkollektor.

17. Elektrode nach Anspruch 16, ferner umfassend ein polymeres Bindemittel.

18. Elektrochemische Zelle, umfassend eine Elektrode wie in Anspruch 16 oder 17 definiert, einen Elektrolyten und eine Gegenelektrode.

19. Elektrochemische Zelle nach Anspruch 18, wobei der Elektrolyt ein flüssiger oder Gel-Elektrolyt ist, der ein Lithiumsalz in einem Lösungsmittel umfasst.

20. Elektrochemische Zelle nach Anspruch 18, wobei der Elektrolyt ein Festpolymerelektrolyt ist, bevorzugt ein Festpolymerelektrolyt, der ein vernetzbares und ionenleitendes verzweigtes Polymer umfasst.

21. Verwendung eines Verfahrens wie in irgendeinem der Ansprüche 1 bis 14 definiert, zum Schutz eines elektrochemisch aktiven Materials gegen Feuchtigkeit.

## Claims

1. Process for preparing an electrode material, the process comprising a step of grafting, on an electrochemically active material, an aryl group of Formula (I): 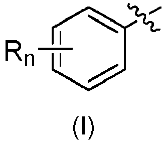 wherein,
R is, independently in each occurrence, a hydrophobic group selected from a fluorine atom and a substituted or unsubstituted C₁₋₁₂alkyl group; and
n is an integer selected from 1 to 5;
wherein the electrochemically active material comprises complex oxide particles coated with a carbon layer, and wherein said grafting occurs on the carbon layer, the carbon layer forming a uniform and adherent coating on the complex oxide particles;
wherein the grafting comprises the steps of:
(a) generating a diazonium ion from an aniline of Formula (II): 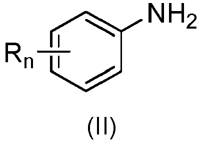 wherein R and n are as defined above;
in the presence of a diazotizing agent, preferably a nitrite salt or an alkylnitrite; and
(b) reacting the diazonium ion generated in step (a) with the carbon layer of the electrochemically active material.

2. Process according to claim 1, wherein the diazonium ion is (i) generated *in situ*; (ii) generated in a reaction medium before adding the electrochemically active material to said reaction medium; or (iii) generated before its addition to the reaction medium comprising the electrochemically active material.

3. Process according to claim 1 or 2, the process further comprising a step of reducing the diazonium ion generated by the addition of a reducing agent.

4. Process according to any one of claims 1 to 3, wherein R is an unsubstituted C₅₋₁₂alkyl group or a C₁₋₃alkyl group substituted with one or more hydrophobic groups.

5. Process according to claim 4, wherein the hydrophobic group is a fluorine.

6. Process according to any one of claims 1 to 5, wherein n is 1, 2, or 3.

7. Process according to any one of claims 1 to 3, wherein the aryl group of Formula (I) is 4-trifloromethylphenyl.

8. Process according to any one of claims 1 to 7, wherein the complex oxide is an olivine-type material of Formula (III):
LiMPO₄ (III)
wherein M is at least one of Fe, Co, Ni, and Mn; or
wherein M is M'ₓM"_{y} where x + y =1, wherein M' and M" are each independently selected from Fe, Co, Ni, and Mn.

9. Process according to claim 8, wherein the complex oxide is LiFePO₄, LiCoPO₄, LiMnPO₄, or LiFeₓMn_{y}PO₄ where 0<x,y<1 and x+y=1.

10. Process according to any one of claims 1 to 7, wherein the complex oxide is a titanate or a lithium titanate or the complex oxide is Li₄Ti₅O₁₂.

11. Process according to any one of claims 1 to 10, which comprises at least one of the following conditions:
- the grafting is carried out for a period of 16 hours or less, or of 2 to 12 hours, or of 2 to 8 hours, limits included;
- the grafting is carried out at a temperature between 0°C and room temperature, limits included;
- the grafting is carried out under inert atmosphere, such as under argon or nitrogen; and/or
- the grafting is carried out in a polar solvent, preferably the polar solvent comprises acetonitrile, water, a carbonate (for example propylene carbonate, ethylene carbonate, or a dialkyl carbonate), dimethyl sulfoxide, or a combination of two or more thereof.

12. Process according to any one of claims 1 to 11, further comprising a step of drying the grafted material under reduced pressure at a temperature of about 50°C to about 110°C for a time of at least 12 h, preferably at about 70°C.

13. Process according to any one of claims 1 to 12, wherein:
- the aniline is used at a concentration ranging from about 2 to about 200 mmol/L, or from about 20 to about 160 mmol/L;
- the quantity of diazotizing agent used is within the range of from 1 to 3 molar equivalents relative to the aniline, for example from 1 to 2 equivalents; and/or
- the electrochemically active material is used in a reaction medium at a concentration within the range of about 5 g/L to about 50 g/L.

14. Process according to any one of claims 1 to 13, further comprising a step of relithiating the electrode material by contacting the grafted material with lithium ions.

15. An electrode material prepared by the process as defined in any one of claims 1 to 14, **characterized in that** the electrode material comprises at least 0.1 % by weight of grafted aryl group, relative to the total weight of electrode material, preferably **characterized in that** the electrode material comprises from 0.5 % by weight to 0.8 % by weight of grafted aryl group, relative to the total weight of electrode material.

16. An electrode comprising a layer or film comprising the electrode material as defined in claim 15, on a current collector.

17. Electrode according to claim 16, further comprising a polymer binder.

18. An electrochemical cell comprising an electrode as defined in claim 16 or 17, an electrolyte and a counter-electrode.

19. Electrochemical cell according to claim 18, wherein the electrolyte is a liquid or gel electrolyte comprising a lithium salt in a solvent.

20. Electrochemical cell according to claim 18, wherein the electrolyte is a solid polymer electrolyte, preferably a solid polymer electrolyte comprising an ion-conducting branched and crosslinkable polymer.

21. Use of a process as defined in any one of claims 1 to 14, for the protection of an electrochemically active material against moisture.
